# FASCICULE DE BREVET EUROPEEN

(11) **EP 1 116 220 B1**
(45) Date de publication et mention de la délivrance du brevet: **12.03.2003**
(21) Numéro de dépôt: 99944675.0
(22) Date de dépôt: 21.09.1999
(51) Int. Cl.: G10L 15/22

(54) **SYSTEME COMPRENANT UN APPAREIL TELECOMMANDE ET UN DISPOSITIF DE COMMANDE VOCALE DE L'APPAREIL**
VORRICHTUNG MIT EINEM FERNGESTEUERTEN GERÄT UND EINER SPRACHGESTEUERTEN FERNBEDIENUNG DAFÜR
SYSTEM COMPRISING A REMOTE CONTROLLED APPARATUS AND VOICE-OPERATED REMOTE CONTROL DEVICE FOR THE APPARATUS

(30) Priorité: 21.09.1998 FR 9811838
(43) Date de publication de la demande: 18.07.2001
(73) Titulaire: THOMSON multimedia, 92100 Boulogne Billancourt (FR)
(72) Inventeur: MINGOT, Jacques, Thomson Multimédia, F-92648 Boulogne (FR); SHAO, Jiang, Thomson Multimédia, F-92648 Boulogne (FR); DIEHL, Eric, Thomson Multimédia, F-92648 Boulogne (FR); TAZINE, Nour-Eddine, Thomson Multimédia, F-92648 Boulogne (FR)
(74) Mandataire: Kohrs, Martin
(86) Numéro de dépôt international: FR9902239
(87) Numéro de publication internationale: WO00017857

(56) Documents cités:
- WO-A-95/06938
- US-A- 5 386 494
- US-A- 5 774 859

## Description

La présente invention concerne un système comprenant un appareil télécommandé et un dispositif de télécommande associé.

Elle concerne plus particulièrement un tel système dans lequel l'appareil télécommandé est muni d'un dispositif d'affichage ou est adapté à être utilisé en étant relié à un tel dispositif, par exemple un récepteur de télévision, un magnétoscope ou un décodeur de signal vidéo reçu d'un satellite ou par le câble.

Les télécommandes sont de plus en plus utilisées pour commander à distance des fonctionnalités d'appareils de ce type. Elles comportent en général un certain nombre de touches couplées à des circuits qui permettent d'émettre des signaux de commande, transmis en général sous forme codée par porteuse infrarouge, à l'appareil télécommandé. Dans ce qui suit, l'exposé de l'invention sera fait en se référant seulement à un récepteur de télévision, dans un soucis de simplification, mais l'invention s'applique plus généralement à tout type d'appareil télécommandé comportant, ou relié à, un dispositif d'affichage.

L'utilisation d'un dispositif de télécommande est parfois ressentie comme complexe par l'utilisateur, par exemple dans le cas où son téléviseur peut recevoir plusieurs dizaines de chaînes différentes, il ne se souvient pas toujours du numéro associé à chacune des chaînes qu'il peut regarder. De même, les réglages du téléviseur (image, son, etc.) ainsi que certaines fonctionnalités (guide de programmes, fonction réveil, etc.) sont souvent accessibles à travers un menu et des sous-menus qui obligent l'utilisateur à effectuer plusieurs opérations successives.

C'est pourquoi on a déjà proposé des dispositifs de télécommande vocale dans lesquels un microphone et un circuit de reconnaissance vocale, qui peut être disposé dans la télécommande ou, plus avantageusement, dans l'appareil télécommandé, sont prévus. L'utilisateur peut ainsi accéder aux différentes fonctionnalités de l'appareil simplement en prononçant des mots-clés correspondant auxdites fonctionnalités.

Le brevet US 5-774-859 décrit un récepteur de télévision possédant un moyen de réception de commandes vocales, un système de reconnaissance vocale pour interpréter les commandes vocales et un vocabulaire reçu d'un réseau de diffusion. La télécommande du terminal est dotée d'un microphone, d'un moyen d'émission pour transmettre le son au récepteur. Les fonctionnalités de l'appareil sont accessibles par la télécommande au travers d'une arborescence de menus.

Le brevet US 5-386-494, décrit un récepteur de télévision possédant un système de reconnaissance vocale. Le récepteur affichant des mots sur un écran, l'utilisateur les prononce en sélectionnant à l'aide de sa télécommande la commande correspondant au mot. Le récepteur peut ainsi associer le son et la commande.

Le problème est que bien souvent, l'utilisateur ne se souvient plus exactement des mots qu'il doit prononcer pour commander certaines fonctionnalités, en particulier lorsqu'il ne les utilise pas fréquemment. Dans ce cas, il préfère encore utiliser les touches de la télécommande et l'intérêt de prévoir une télécommande vocale s'en trouve limité.

Un objet de la présente invention est de résoudre ce problème.

A cet effet, l'invention propose un système comprenant : un appareil télécommandé (1, 2) muni d'un dispositif d'affichage (3) ou adapté à être relié à un tel dispositif ; un dispositif de télécommande (10) comportant un microphone (18) : des moyens (44) de reconnaissance vocale adaptés à recevoir le signal issu du microphone et à générer un signal de commande d'une fonctionnalité de l'appareil correspondant au mot ou groupe de mots capté par le microphone, dans lequel les fonctionnalités de l'appareil sont accessibles par le dispositif de télécommande à travers une arborescence de menus adaptés à être affichés sur un écran (3) dudit dispositif d'affichage, caractérisé en ce qu'il comporte des moyens d'affichage (54) sur ledit écran d'une liste (65, 75) des mots ou groupes de mots correspondant aux fonctionnalités de l'appareil accessibles par commande vocale, ladite liste étant adaptée à être affichée indépendamment de l'affichage des menus.

Grâce à cette liste, l'utilisateur sait immédiatement quelles fonctionnalités sont accessibles par commandes vocales et surtout, il visualise les mots-clés qu'il doit prononcer pour accéder à ces fonctionnalités. Ainsi, il n'a plus d'hésitation et peut profiter pleinement de toutes les possibilités offertes par la télécommande vocale.

Selon un aspect de l'invention, la liste des fonctionnalités accessibles par commande vocale est différente selon le contexte dans lequel se trouve l'appareil.

Selon un mode de réalisation particulier, les fonctionnalités de l'appareil sont accessibles par le dispositif de télécommande à travers une arborescence de menus, la liste des fonctionnalités accessibles par commande vocale étant spécifique à chaque menu ou sous-menu.

Dans ce mode de réalisation particulier, des fonctionnalités de l'appareil sont accessibles par commande vocale en court-circuitant des branches de l'arborescence de menus.

Selon un autre aspect de l'invention, le dispositif d'affichage comprend un écran et les moyens d'affichage sont adaptés à afficher la liste des fonctionnalités accessibles par commande vocale dans une fenêtre de l'écran, les mots ou groupes de mots correspondant auxdites fonctionnalités défilant dans ladite fenêtre. Des commandes vocales sont prévues dans ce cas pour arrêter et pour déclencher le défilement de la liste dans la fenêtre.

Selon un mode de réalisation particulier, le dispositif de télécommande comprend un commutateur actionnable par l'utilisateur de façon à autoriser l'émission, par un émetteur, de signaux provenant du microphone, l'affichage de la liste des fonctionnalités accessibles par commande vocale étant proposée à l'utilisateur lorsque le commutateur est actionné.

L'invention concerne également un appareil télécommandé (1, 2) muni d'un dispositif d'affichage (3) ou adapté à être relié à un tel dispositif et comportent des moyens (44) de reconnaissance vocale adaptés à recevoir un signal issu d'un microphone (18) inclus dans un dispositif de télécommande (10) et à générer un signal de commande d'une fonctionnalité de l'appareil correspondant au mot ou groupe de mots capté par le microphone, les fonctionnalités de l'appareil étant accessibles par le dispositif de télécommande (10) à travers une arborescence de menus adaptés à être affichés sur un écran (3) dudit dispositif d'affichage, caractérisé en ce qu'il comporte des moyens d'affichage (54) sur ledit écran d'une liste (65, 75) des mots ou groupes de mots correspondant aux fonctionnalités de l'appareil accessibles par commande vocale, ladite liste étant adaptée à être affichée indépendamment de l'affichage des menus.

D'autres caractéristiques et avantages de l'invention apparaîtront à travers la description suivante d'un mode de réalisation particulier, non limitatif, de l'invention faite en référence aux figures annexées, parmi lesquelles :
- la figure 1 représente un système selon l'invention ;
- la figure 2 est un schéma sous forme de blocs des circuits d'un dispositif de télécommande appartenant à un système selon l'invention ;
- la figure 3 est un schéma, également sous forme de blocs, de circuits équipant un téléviseur appartenant à un système selon l'invention ;
- la figure 4 illustre l'arborescence des menus permettant d'accéder aux différentes fonctionnalités d'un téléviseur appartenant à un système selon l'invention ;
- les figures 5 et 6 représentent le contenu de la fenêtre d'aide vocale dans deux contextes différents de mise en oeuvre de l'invention ;
- les figures 7 et 8 représentent le contenu de l'écran du téléviseur à deux instants différents de mise en oeuvre de l'invention.

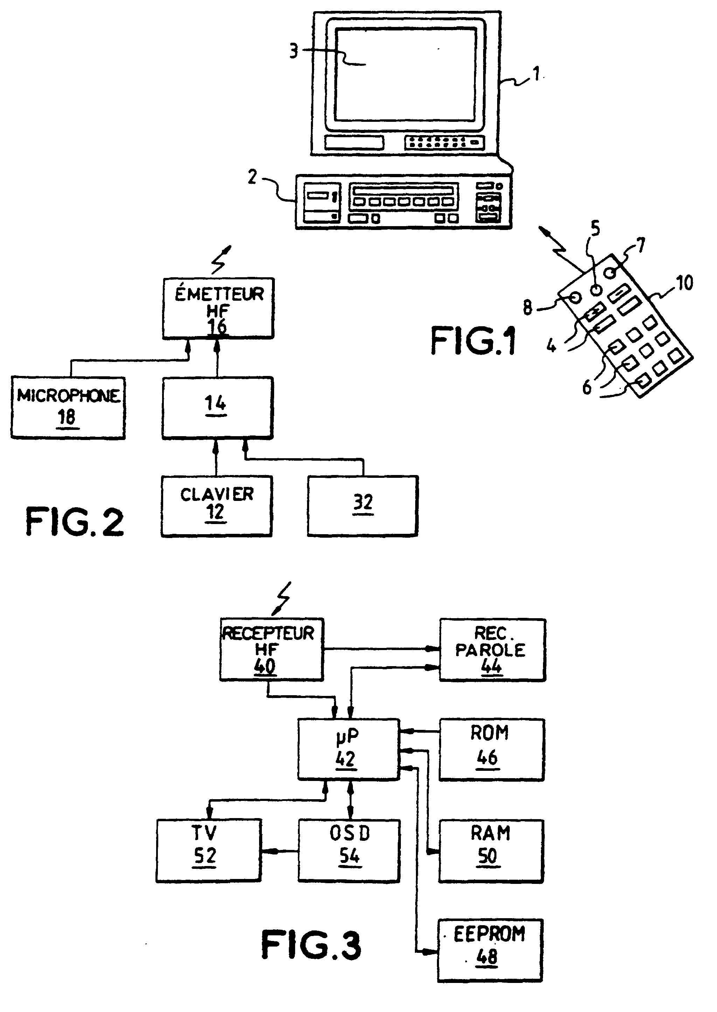

Sur la figure 1, on a représenté un téléviseur 1 auquel est relié un magnétoscope 2. Ces deux appareils peuvent être commandés à distance à l'aide du dispositif de télécommande 10. Dans la suite de la description, on. s'intéressera plus particulièrement à la commande du téléviseur 1.

Le dispositif de télécommande 10, qui est également représenté de manière schématique sur la figure 2, comporte de façon classique un clavier 12 muni de touches 6, correspondant par exemple à des chiffres, et 4, par exemple des touches "plus" et "moins" pour régler notamment le volume du son du téléviseur 1. Un circuit de codage 14 code les signaux correspondant à l'actionnement des touches avant de les transmettre à un émetteur 16 de signaux à haute fréquence (HF) permettant d'envoyer les signaux de commande vers le téléviseur 1.

Le dispositif comporte également un microphone 18 équipé d'un circuit (non montré) de mise en forme des signaux et connecté à l'émetteur 16. En outre, une touche 5 est prévue sur le dispositif de télécommande pour actionner un commutateur 32 qui autorise la transmission, par l'émetteur 16, des signaux provenant du microphone 18 vers le téléviseur, uniquement lorsque l'utilisateur presse ladite touche. Ceci a pour but de limiter la consommation d'énergie par l'émetteur lorsque l'utilisateur n'envoie pas de commande vocale.

Le téléviseur 1 comporte un écran 3 qui permet d'afficher l'image vidéo correspondant à un signal issu du tuner du téléviseur ou provenant du magnétoscope 2. L'écran 3 permet aussi d'afficher un menu de commande et de réglage du téléviseur. Il permet en outre, selon l'invention, d'afficher la liste des mots ou expressions qui peuvent être prononcés par l'utilisateur pour accéder aux diverses fonctionnalités du téléviseur par commande vocale. L'affichage de cette liste s'effectue dans une fenêtre que l'on appellera par la suite fenêtre d'aide vocale et qui est indépendante des fenêtres d'affichage des menus.

La figure 3 représente les éléments du téléviseur permettant d'exploiter les signaux provenant du dispositif de télécommande 10.

Un récepteur haute fréquence (HF) 40 reçoit les signaux fournis par l'émetteur 16. Il les délivre, d'une part à un microprocesseur 42, et d'autre part à un circuit 44 de reconnaissance de parole. Les signaux fournis par le clavier 12 sont traités directement par le microprocesseur 42 tandis que les signaux fournis par le microphone 18 sont traités par le circuit 44 de reconnaissance de parole.

Le microprocesseur 42 est associé à une mémoire morte (ROM) 46. contenant les programmes qui doivent être exécutés par le microprocesseur. Une mémoire morte programmable (EEPROM) 48 permet de mémoriser des données persistantes telles que, par exemple, la table d'attribution des canaux. Une mémoire vive (RAM) 50 communique également avec le microprocesseur 42 afin de stocker des données non persistantes, c'est à dire volatiles.

Les liaisons des mémoire vives 50 et programmable 48 avec le microprocesseur 42 sont du type bidirectionnel. De même, le circuit 44 de reconnaissance de la parole est connecté par une liaison bidirectionnelle au microprocesseur 42.

Le microprocesseur 42 commande, d'une part, les diverses fonctionnalités du téléviseur, telles que le volume, le changement de chaîne, la luminosité et le contraste, etc. et, d'autre part un circuit 54 d'affichage de données sur l'écran, appelé souvent circuit OSD, de l'anglais "On Screen Display" (signifiant littéralement "affichage sur l'écran"). Le circuit OSD 54 est un générateur de texte et de graphisme qui permet d'afficher à l'écran des menus, des pictogrammes (par exemple, un numéro correspondant à la chaîne visualisée) et qui permet d'afficher la fenêtre d'aide vocale de l'invention.

Lorsque l'utilisateur émet une commande vocale en prononçant un mot correspondant à une fonctionnalité particulière du téléviseur, la commande vocale, transmise par l'émetteur 16 vers le récepteur 40, est traitée par le circuit 44 de reconnaissance vocale pour être convertie en un signal interprétable par le microprocesseur 42 afin que lui-même le transforme en une commande exécutable par les circuits 52 du téléviseur.

Ainsi, un grand nombre de fonctionnalités du téléviseur sont accessibles grâce à la commande vocale de manière souvent plus simple et plus rapide que lorsqu'elles sont commandées à partir des touches du dispositif de télécommande.

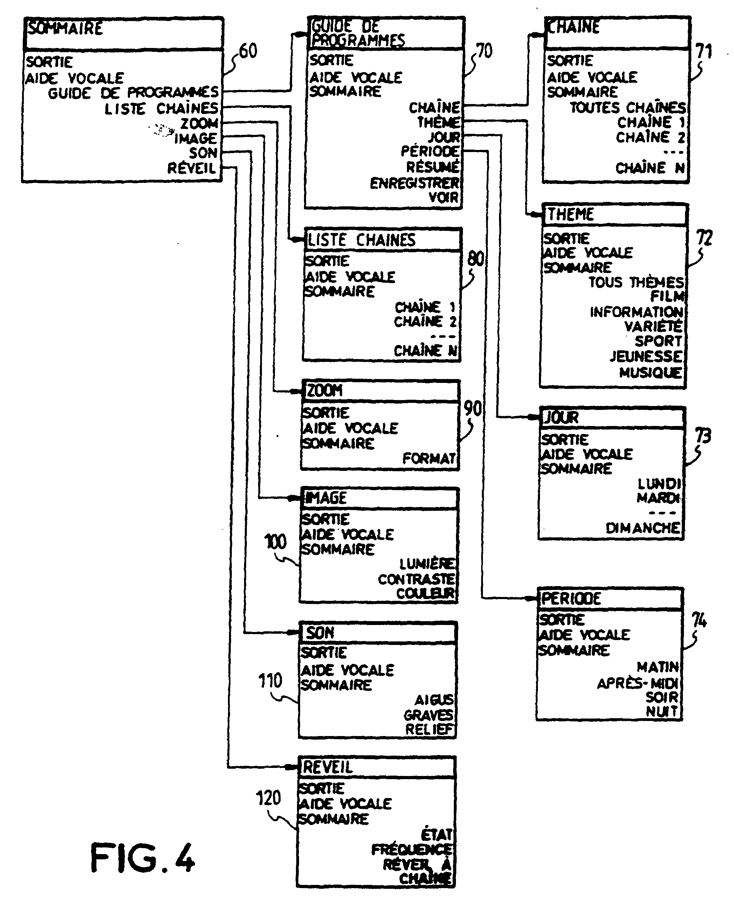

Sur la figure 4, on a représenté l'arborescence des menus permettant d'accéder aux différentes fonctionnalités du téléviseur. La fenêtre 60 représente le menu principal ou sommaire qui s'affiche sur l'écran du téléviseur, soit lorsque l'utilisateur appuie sur une touche particulière 8 (Fig. 1) du dispositif de télécommande, soit lorsqu'il prononce le mot "sommaire" ou "menu" devant le microphone du dispositif de télécommande.

L'arborescence de menus présentée sur la figure 4 est donnée à titre d'exemple mais on peut tout à fait imaginer appliquer l'invention à des menus comportant d'autres fonctionnalités.

Le menu principal 60 propose l'accès à six fonctionnalités, qui apparaissent sous forme de menus 70, 80, 90, 100, 110 et 120 : un guide de programme 70, la liste des chaînes disponibles 80, une fonction "Zoom" 90 permettent de modifier le format d'affichage, le réglage de certains paramètres de l'image 100 et du son 110 et enfin, une fonction "Réveil" 120 permettant de programmer à l'avance la mise en route du téléviseur.

Certains menus, en l'espèce le menu "Guide de programme" 70, donnent accès à des sous-menus permettant de détailler de manière plus fine certaines fonctionnalités. Dans l'exemple de la figure 4, le menu 70 permet d'accéder à des rubriques "Chaîne" 71, 'Thème" 72, "Jour" 73 et "Période" 74 permettant de sélectionner respectivement la chaîne, le thème, le jour et la période dans la journée pour lesquels l'utilisateur souhaite connaître les programmes.

Au départ, lorsque l'utilisateur appelle le menu principal comme on l'a vu ci-dessus, la fenêtre 60 s'affiche sur l'écran, en surimpression par rapport à l'image vidéo courante. Pour accéder aux différentes rubriques de l'arborescence, l'utilisateur peut, soit procéder de manière classique en se déplaçant dans la fenêtre 60 à l'aide de touches particulières "Haut", "Bas" et en sélectionnant une ligne particulière à l'aide d'une touche 7 (Fig. 1) du dispositif de télécommande, soit utiliser la commande vocale en prononçant l'un des mots-clés correspondant à l'intitulé des rubriques proposées. Par exemple, en prononçant le mot "zoom", l'utilisateur provoque l'affichage à l'écran de la fenêtre 90 du menu "Zoom" qui permet de modifier le format d'affichage de l'image sur l'écran du téléviseur en choisissant parmi le format 4/3, le format 16/9 ou encore un autre format d'affichage.

L'utilisateur procède de la même manière pour sélectionner les fonctionnalités dans les menus ou sous-menus de l'arborescence.

On retrouve dans chaque menu ou sous-menu de l'arborescence trois commandes identiques : "Sortie", "Aide vocale" et "Sommaire". La commande "Sortie" permet de sortir du menu pour retourner au programme télévisé classique; la commande "Sommaire" permet de retourner au menu principal. Naturellement cette commande "Sommaire" n'est pas proposée dans le menu principal. La commande "Aide vocale" permet, selon l'invention d'afficher une fenêtre d'aide vocale contenant tous les mots-clés correspondant aux fonctionnalités accessibles par commande vocale, cette fenêtre étant affichée indépendamment des fenêtre des menus décrites précédemment.

Dans un mode de réalisation préféré, le contenu de la fenêtre d'aide vocale, c'est à dire la liste des mots-clés, est différent selon le contexte dans lequel on se trouve, c'est à dire selon que le téléviseur est en mode télévisé classique ou bien qu'un menu particulier est sélectionné.

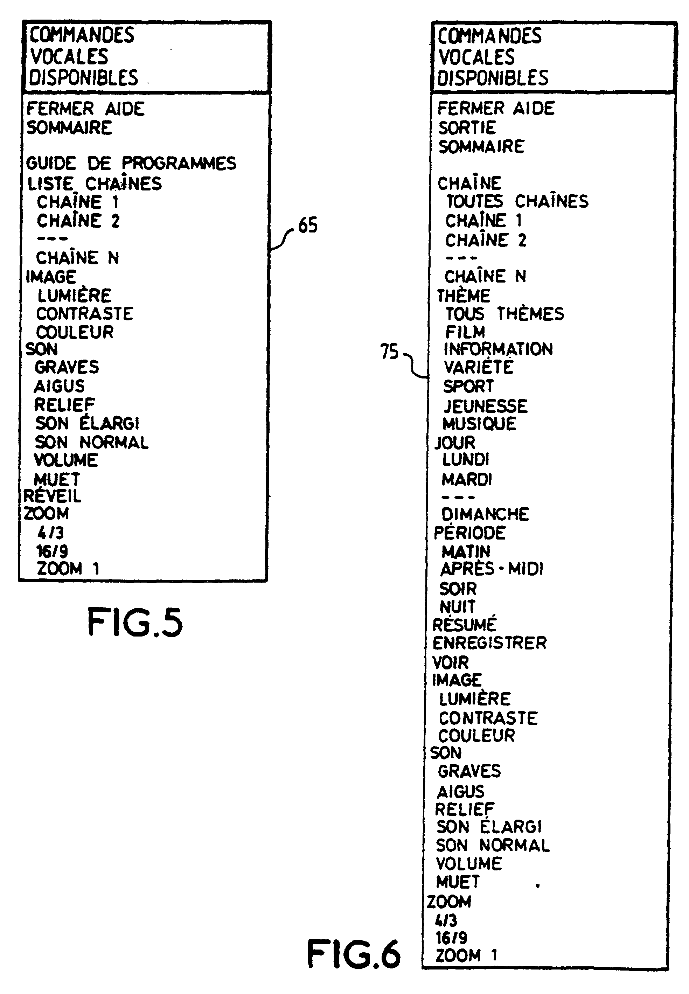

Ainsi, on a représenté sur la figure 5 le contenu de la fenêtre d'aide vocale tel qu'il apparaît lorsque le téléviseur se trouve en mode télévisé classique, c'est à dire lorsqu'un programme vidéo, reçu par exemple du tuner du téléviseur ou d'un magnétoscope, est affiché à l'écran. Il est possible, en prononçant les mots ou groupes de mots appropriés parmi ceux présentés dans la liste 65 de la figure 5, accéder aux menus "Guide de programme" 70, "Liste chaîne" 80, "Image" 100, "Son" 110, etc.

Selon un mode de réalisation particulièrement avantageux de l'invention, la commande vocale permet d'accéder directement à certaines fonctionnalités sans passer par des étapes successives comme dans le cas où on utilise les touches du dispositif de télécommande. On parlera dans ce cas de "raccourcis vocaux". Par exemple, pour changer le format d'affichage de l'image à l'écran et passer à un format d'affichage 16/9 (lorsque le format courant est 4/3 par exemple), il suffit que l'utilisateur prononce les mots "seize neuvième" devant le micro du dispositif de télécommande pour que la commande correspondante soit transmise aux circuits 52 (Fig. 3) du téléviseur et que le format d'affichage soit modifié en conséquence. Si l'utilisateur voulait atteindre le même résultat en utilisant les touches du dispositif de télécommande, il devrait tout d'abord appuyer sur la touche 8 (Fig. 1) permettant d'afficher le menu principal 60 (Fig. 4) à l'écran; il devrait ensuite se déplacer à l'aide de touches "haut" et "bas" pour atteindre la ligne "Zoom" du menu principal, sélectionner cette ligne en pressant la touche 7 ce qui provoquerait l'affichage du menu "Zoom" et enfin, choisir le format 16/9 à l'aide de touches de déplacement et de sélection du dispositif de télécommande. L'affichage de la fenêtre d'aide vocale est particulièrement avantageux dans ce cas car l'utilisateur ne connaît pas forcément toutes les fonctionnalités auxquelles il peut accéder par raccourci vocal à partir d'un contexte donné.

Selon un autre aspect particulièrement avantageux de l'invention, il est possible d'utiliser des synonymes des mots ou groupes de mots cités dans la liste de la fenêtre d'aide vocale pour sélectionner les fonctionnalités correspondantes. Ainsi, dans le cas de l'exemple précédent, l'utilisateur pourra prononcer, à la place des mots "seize neuvième", les mots "seize neuf' ou "seize par neuf'. Il suffit pour cela de programmer le circuit de reconnaissance de parole 44 pour lui apprendre à reconnaître les synonymes des différents mots-clés permettant d'accéder aux fonctionnalités du téléviseur.

Sur la figure 6, on a représenté le contenu de la fenêtre d'aide vocale dans un autre contexte, lorsque le menu "Guide de programmes" est activé. On constate qu'un certain nombre de fonctionnalités nouvelles sont accessibles dans la liste 75 : toutes celles permettant d'accéder aux sous-menus 71 à 74 du menu "Guide de programmes". Par ailleurs, des fonctionnalités qui étaient présentes dans la liste 65 de la figure 5 sont également accessibles par commande vocale dans le contexte du menu de "Guide de programme", par exemple, les fonctionnalités relatives au réglage de l'image, du son ou du format de l'image ("Zoom"). Ceci permet de manière très avantageuse d'accéder très rapidement à un autre menu lorsque l'on se trouve dans un menu donné sans avoir besoin de repasser par le menu principal comme cela serait nécessaire si l'utilisateur utilisait les touches du dispositif de télécommande.

Il est intéressant de noter qu'un même mot ou groupe de mots peut commander une fonctionnalité différente suivant le contexte dans lequel il est prononcé. Par exemple, sur la figure 5, on voit que dans la liste 65 des fonctionnalités accessibles par commande vocale, on trouve les mots "Chaîne 1", "Chaîne 2", etc. , "Chaîne N", mots que l'on retrouve également dans la liste 75 de la figure 6. Dans le contexte de la figure 5, c'est à dire en mode télévisé classique, lorsque l'utilisateur prononce "chaîne deux", le téléviseur affiche à l'écran le programme de la chaîne numéro 2. Par contre, dans le contexte de la figure 6, c'est à dire en mode "Guide de programme", la prononciation des mots "chaîne deux" par l'utilisateur indique simplement qu'il veut connaître les programmes de la chaîne numéro 2 et entraîne l'affichage à l'écran des programmes de la chaîne numéro 2 en fonction des autres paramètres (thèmes, jour, etc.) qui ont été choisis.

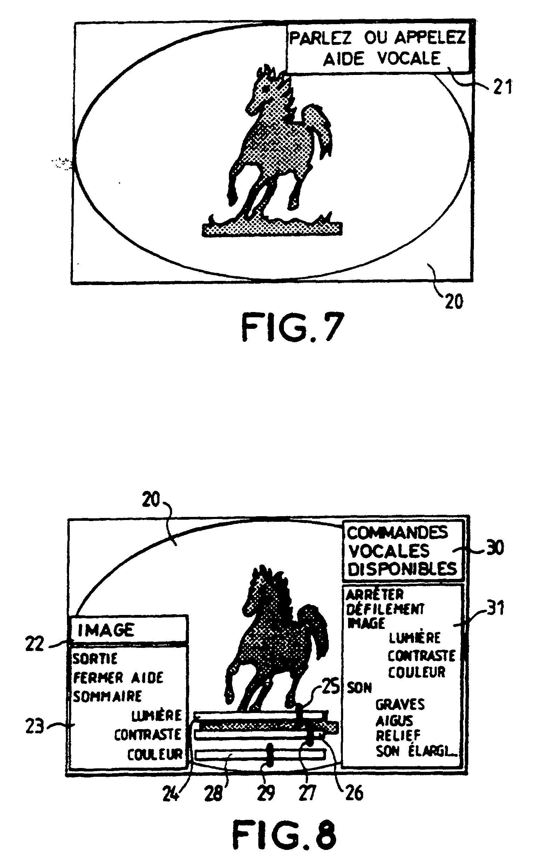

En référence aux figures 7 et 8 qui représentent le contenu de l'écran du téléviseur à deux instants différents, on va maintenant expliquer comment est mise en oeuvre l'invention au niveau de l'affichage à l'écran du téléviseur.

Sur les figures 7 et 8, une image 20 correspondant à un programme télévisé est affichée à l'écran du téléviseur. Lorsque l'utilisateur presse la touche 5 (Fig. 1) du dispositif de télécommande et indique par cette action son intention d'utiliser la commande vocale, un message apparaît dans une fenêtre 21 à l'écran du téléviseur proposant à l'utilisateur, soit de parler s'il connaît déjà les mots-clés servant à commander les fonctionnalités du téléviseur, soit d'appeler l'aide vocale pour obtenir la liste desdits mots-clés.

Sur la figure 8, on suppose que l'utilisateur a tout d'abord sélectionné le menu "Image", soit en prononçant le mot "image", soit à l'aide des touches appropriées du dispositif de télécommande, provoquant ainsi l'affichage des fenêtres 22 et 23 du menu "Image", en surimpression sur l'image vidéo 20, dans la partie gauche de l'écran. Dans ce menu, il est possible de régler la luminosité, le contraste et la couleur de l'image en utilisant des touches "plus" et "moins" du dispositif de télécommande ou en prononçant les mots "plus" et "moins", provoquant ainsi le déplacement de curseurs 25, 27 et 29 sur des réglettes 24, 26 et 28. Les curseurs et les réglettes sont des graphismes affichés à l'écran pour que l'utilisateur repère visuellement son réglage.

On suppose en outre que l'utilisateur a demandé l'affichage de la fenêtre d'aide vocale pour connaître les fonctionnalités accessibles dans le contexte où il se trouve, c'est à dire dans le menu "Image". Une fenêtre d'aide vocale 30, 31 est donc affichée sur la partie droite de l'écran. Comme l'intégralité de la liste des fonctionnalités accessibles ne peut pas être affichée en même temps dans la fenêtre, cette liste défile en boucle dans la fenêtre 31 tant que l'utilisateur ne prononce pas les mots "arrêter défilement" auquel cas, la fenêtre se fige dans l'état où elle se trouve à ce moment là. Lorsque la fenêtre se trouve dans un état figé, les mots "Arrêter défilement" de la liste sont remplacés par "Défilement des pages" qui correspondent aux mots que doit prononcer l'utilisateur pour reprendre le défilement.

Dès que l'utilisateur prononce un des mots-clés apparaissant dans la liste qui défile dans la fenêtre 31, ladite fenêtre est aussitôt fermée et la fonctionnalité correspondante effectuée.

Dans la fenêtre 23, une des rubriques est différente de celles qui apparaissent à la figure 4 dans le menu 100. En effet, la rubrique "Aide vocale", qui est présente lorsque la fenêtre d'aide vocale n'est pas affichée pour proposer à l'utilisateur de la visualiser, est remplacée par la rubrique "Fermer aide" lorsque la fenêtre d'aide vocale est en train d'être affichée comme c'est le cas sur la figure 8, pour proposer cette fois à l'utilisateur de fermer ladite fenêtre.

## Revendications

1. Système comprenant :
un appareil télécommandé (1, 2) muni d'un dispositif d'affichage (3) ou adapté à être relié à un tel dispositif ;
un dispositif de télécommande (10) comportant un microphone (18) ;
des moyens (44) de reconnaissance vocale adaptés à recevoir le signal issu du microphone et à générer un signal de commande d'une fonctionnalité de l'appareil correspondant au mot ou groupe de mots capté par le microphone,
dans lequel les fonctionnalités de l'appareil sont accessibles par le dispositif de télécommande à travers une arborescence de menus adaptés à être affichés sur un écran (3) dudit dispositif d'affichage,
**caractérisé en ce qu'**il comporte des moyens d'affichage (54) sur ledit écran d'une liste (65, 75) des mots ou groupes de mots correspondant aux fonctionnalités de l'appareil accessibles par commande vocale, ladite liste étant adaptée à être affichée indépendamment de l'affichage des menus.

2. Système selon la revendication 1, **caractérisé en ce que** la liste (65, 75) des fonctionnalités accessibles par commande vocale est différente selon le contexte dans lequel se trouve l'appareil.

3. Système selon l'une des revendications 1 ou 2, **caractérisé en ce que** la liste des fonctionnalités accessibles par commande vocale est spécifique à chaque menu ou sous-menu.

4. Système selon la revendication 3, **caractérisé en ce que** des fonctionnalités de l'appareil sont accessibles par commande vocale en parcourant plusieurs branches de l'arborescence de menus à la fois.

5. Système selon l'une des revendications précédentes, **caractérisé en ce que** les moyens d'affichage sont adaptés à afficher la liste des fonctionnalités accessibles par commande vocale dans une fenêtre (31) de l'écran, les mots ou groupes de mots correspondant auxdites fonctionnalités défilant dans ladite fenêtre (31).

6. Système selon la revendication 5, **caractérisé en ce que** des commandes vocales sont prévues pour arrêter et pour déclencher le défilement de la liste dans la fenêtre (31).

7. Système selon l'une des revendications précédentes, **caractérisé en ce qu'**une fonctionnalité de l'appareil est accessible par commande vocale par un mot ou groupe de mot cité dans la liste (65, 75) et le cas échéant par au moins un synonyme de ce mot ou groupe de mots.

8. Système selon l'une des revendications précédentes, dans lequel le dispositif de télécommande (10) comprend un commutateur (32) actionnable par l'utilisateur de façon à autoriser l'émission, par un émetteur (16), de signaux provenant du microphone (18), **caractérisé en ce que** l'affichage de la liste des fonctionnalités accessibles par commande vocale est proposée à l'utilisateur lorsque ledit commutateur est actionné.

9. Appareil télécommandé (1, 2) muni d'un dispositif d'affichage (3) ou adapté à être relié à un tel dispositif et comportant des moyens (44) de reconnaissance vocale adaptés à recevoir un signal issu d'un microphone (18) inclus dans un dispositif de télécommande (10) et à générer un signal de commande d'une fonctionnalité de l'appareil correspondant au mot ou groupe de mots capté par le microphone, les fonctionnalités de l'appareil étant accessibles par le dispositif de télécommande (10) à travers une arborescence de menus adaptés à être affichés sur un écran (3) dudit dispositif d'affichage,
**caractérisé en ce qu'**il comporte des moyens d'affichage (54) sur ledit écran d'une liste (65, 75) des mots ou groupes de mots correspondant aux fonctionnalités de l'appareil accessibles par commande vocale, ladite liste étant adaptée à être affichée indépendamment de l'affichage des menus.

10. Appareil télécommandé (1, 2) selon la revendication 9, **caractérisé en ce que** la liste (65, 75) des fonctionnalités accessibles par commande vocale est différente selon le contexte dans lequel se trouve l'appareil.

11. Appareil télécommandé (1, 2) selon la revendication 9 ou 10, **caractérisé en ce que** les moyens d'affichage sont adaptés à afficher la liste des fonctionnalités accessibles par commande vocale dans une fenêtre (31) de l'écran, les mots ou groupes de mots correspondant auxdites fonctionnalités défilant dans ladite fenêtre (31).

12. Appareil télécommandé (1, 2) selon l'une des revendications 9 à 11, **caractérisé en ce qu'**une fonctionnalité de l'appareil est accessible par commande vocale par un mot ou groupe de mot cité dans la liste (65, 75) et le cas échéant par au moins un synonyme de ce mot ou groupe de mots.

## Claims

1. System comprising:
a remote controlled apparatus (1, 2) furnished with a display device (3) or adapted to be linked to such a device;
a remote control device (10) comprising a microphone (18);
voice recognition means (44) adapted to receive the signal emanating from the microphone and to generate a signal for controlling a functional feature of the apparatus corresponding to the word or group of words picked up by the microphone,
in which the functional features of the apparatus are accessible by the remote control device through a tree of menus adapted to be displayed on a screen (3) of the said display device,
**characterized in that** it comprises means (54) for displaying on the said screen a list (65, 75) of the words or groups of words corresponding to the functional features of the apparatus which can be accessed by voice control, the said list being adapted to be displayed independently of the display of the menus.

2. System according to Claim 1, **characterized in that** the list (65, 75) of functional features which can be accessed by voice control is different depending on what context the apparatus is in.

3. System according to one of Claims 1 or 2, **characterized in that** the list of functional features which can be accessed by voice control is specific to each menu or submenu.

4. System according to Claim 3, **characterized in that** functional features of the apparatus can be accessed by voice control by traversing several branches of the tree of menus simultaneously.

5. System according to one of the preceding claims, **characterized in that** the display means are adapted to display the list of functional features which can be accessed by voice control in a window (31) of the screen, the words or groups of words corresponding to the said functional features scrolling through the said window (31).

6. System according to Claim 5, **characterized in that** voice controls are provided for stopping and for triggering the scrolling of the list through the window (31).

7. System according to one of the preceding claims, **characterized in that** a functional feature of the apparatus can be accessed by voice control by a word or group of words cited in the list (65, 75) and as appropriate by at least one synonym of this word or group of words.

8. System according to one of the preceding claims, in which the remote control device (10) comprises a switch (32) which can be actuated by the user so as to authorize the transmission, by a transmitter (16), of signals originating from the microphone (18), **characterized in that** the displaying of the list of functional features which can be accessed by voice control is proposed to the user when the said switch is actuated.

9. Remote controlled apparatus (1, 2) furnished with a display device (3) or adapted to be linked to such a device and comprising voice recognition means (44) adapted to receive a signal emanating from a microphone (18) included in a remote control device (10) and to generate a signal for controlling a functional feature of the apparatus corresponding to the word or group of words picked up by the microphone, the functional features of the apparatus being accessible by the remote control device (10) via a tree of menus adapted to be displayed on a screen (3) of the said display device,
**characterized in that** it comprises means (54) for displaying on the said screen a list (65, 75) of the words or groups of words corresponding to the functional features of the apparatus which can be accessed by voice control, the said list being adapted to be displayed independently of the display of the menus.

10. Remote controlled apparatus (1, 2) according to Claim 9, **characterized in that** the list (65, 75) of functional features which can be accessed by voice control is different depending on what context the apparatus is in.

11. Remote controlled apparatus (1, 2) according to Claim 9 or 10, **characterized in that** the display means are adapted to display the list of functional features which can be accessed by voice control in a window (31) of the screen, the words or groups of words corresponding to the said functional features scrolling through the said window (31).

12. Remote controlled apparatus (1, 2) according to one of Claims 9 to 11, **characterized in that** a functional feature of the apparatus can be accessed by voice control by a word or group of words cited in the list (65, 75) and as appropriate by at least one synonym of this word or group of words.

## Patentansprüche

1. System mit:
einer ferngesteuerten Vorrichtung (1, 2), die mit einer Wiedergabeeinheit (3) versehen oder mit einer derartigen Einheit verbunden ist,
einer Femsteuereinheit (10) mit einem Mikrophon (18),
Mitteln (44) zur Spracherkennung zum Empfang des Signals von dem Mikrophon und zur Erzeugung eines Steuersignals für eine Funktionalität der Vorrichtung, das einem Wort oder einer Gruppe von durch das Mikrophon aufgenommenen Wörtern entspricht,
in dem die Funktionalitäten der Vorrichtung durch die Fernsteuereinheit über einen Menübaum zugänglich sind, wobei die Menüs zur Wiedergabe auf einem Schirm (3) der Wiedergabeeinheit vorgesehen sind,
**gekennzeichnet durch**
Mittel zur Wiedergabe (54) einer Liste (65, 75) von Wörtern oder Gruppen von Wörtern auf dem Schirm, die Funktionalitäten der Vorrichtung entsprechen, die **durch** die Sprachsteuerung zugänglich sind, wobei diese Liste für eine von der Wiedergabe der Menüs unabhängige Wiedergabe vorgesehen ist.

2. System nach Anspruch 1, **dadurch gekennzeichnet, dass** die Liste (65, 75) der durch die Sprachsteuerung zugänglichen Funktionalitäten entsprechend dem Kontext, indem sich die Vorrichtung befindet, unterschiedlich ist.

3. System nach einem der Ansprüche 1 oder 2, **dadurch gekennzeichnet, dass** die Liste der Funktionalitäten, die durch die Sprachsteuerung zugänglich sind, spezifisch für jedes Menü oder Untermenü ist.

4. System nach Anspruch 3, **dadurch gekennzeichnet, dass** Funktionalitäten der Vorrichtung durch eine Sprachsteuerung über mehrere Zweige des Menübaums zugänglich sind.

5. System nach einem der vorangehenden Ansprüche, **dadurch gekennzeichnet, dass** die Wiedergabemittel zur Wiedergabe der Liste von Funktionalitäten vorgesehen ist, zu denen ein Zugriff über die Sprachsteuerung in einem Fenster (31) des Schirms besteht, und die Wörter oder Gruppen von Wörtern denjenigen Funktionalitäten entsprechen, die über das Fenster (31) ablaufen.

6. System nach Anspruch 5, **dadurch gekennzeichnet, dass** Sprachsteuerungen zum Anhalten und zur Auslösung des Durchlaufs der Liste in dem Fenster (31) vorgesehen sind.

7. System nach einem der vorangehenden Ansprüche, **dadurch gekennzeichnet, dass** eine Funktionalität der Vorrichtung durch eine Sprachsteuerung über ein Wort oder eine Gruppe von Wörtern zugänglich ist, die in der Liste (65, 75) genannt und gegebenenfalls durch wenigstens ein Synonym dieses Wortes oder dieser Gruppe von Wörtern zugänglich ist.

8. System nach einem der vorangehenden Ansprüche, in dem die Fernsteuereinheit (10) einen Schalter (32) enthält, der durch den Benutzer derart betätigt werden kann, dass die Übertragung von Signalen über einen Sender (16) ermöglicht wird, die von dem Mikrophon (18) stammen, **dadurch gekennzeichnet, dass** die Wiedergabe der Liste von Funktionalitäten, die durch die Sprachsteuerung zugänglich sind, dem Benutzer vorgeschlagen wird, wenn der Schalter betätigt wird.

9. Ferngesteuerte Vorrichtung (1, 2), die mit einer Wiedergabeeinheit (3) versehen oder mit einer derartigen Einheit verbunden ist, mit Mitteln (44) zur Spracherkennung zum Empfang eines Signals von einem Mikrophon (18) in einer Fernsteuereinheit (10) und zum Erzeugen eines Steuersignals einer Funktionalität der Vorrichtung entsprechend dem durch das Mikrophon aufgenommenen Wort oder der Gruppe von Wörtern, wobei die Funktionalitäten der Vorrichtung durch die Femsteuereinheit (10) über einen Baum von Menüs zugänglich sind, die zur Wiedergabe auf einem Schirm (3) der Wiedergabeeinheit vorgesehen sind,
**gekennzeichnet durch** Mittel zur Wiedergabe (54) einer Liste (65, 75) von Wörtern oder Gruppen von Wörtern auf dem Schirm, die den Funktionalitäten der Vorrichtung entsprechen, zu denen **durch** die Sprachsteuerung ein Zugriff besteht, wobei die Liste dafür vorgesehen ist, unabhängig von der Wiedergabe der Menüs wiedergegeben zu werden.

10. Ferngesteuerte Vorrichtung (1, 2) nach Anspruch 9, **dadurch gekennzeichnet, dass** die Liste (65, 75) der Funktionalitäten, die durch die Sprachsteuerung zugänglich sind, entsprechend dem Kontext unterschiedlich sind, indem sich die Vorrichtung befindet.

11. Ferngesteuerte Vorrichtung (1, 2) nach Anspruch 9 oder 10, **dadurch gekennzeichnet, dass** die Wiedergabemittel dafür vorgesehen sind, die Liste der Funktionalitäten wiederzugeben, die durch die Sprachsteuerung in einem Fenster (31) des Schirms zugänglich sind, wobei die Wörter oder die Gruppen von Wörtern, die den genannten Funktionalitäten entsprechen, in dem Fenster (31) ablaufen.

12. Ferngesteuerte Vorrichtung (1, 2) nach einem der Ansprüche 9 bis 11, **dadurch gekennzeichnet, dass** eine Funktionalität der Vorrichtung durch eine Sprachsteuerung über ein Wort oder eine Gruppe von in der Liste (65, 75) genannten Wörtern und gegebenenfalls durch wenigstens ein Synonym des Wortes oder der Gruppe von Wörtern zugänglich ist.
